(19) **Europäisches Patentamt**

**European Patent Office**

**Office européen des brevets**

(11) **EP 0 769 470 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.⁷: **B66B 11/04**, F16F 15/121

(21) Anmeldenummer: **96115999.3**

(22) Anmeldetag: **05.10.1996**

(54) **Aufzugstreibscheibe mit rotierender Schwingungsdämpfung**

Lift driving sheave with rotating vibration damper

Poulie d'entrainement d'ascenseur avec ammortisseur rotatif de vibration

(84) Benannte Vertragsstaaten:
**AT BE CH DE ES FR GB IT LI NL PT**

(30) Priorität: **17.10.1995 CH 293695**

(43) Veröffentlichungstag der Anmeldung:
**23.04.1997 Patentblatt 1997/17**

(73) Patentinhaber: **INVENTIO AG**
**CH-6052 Hergiswil (CH)**

(72) Erfinder: **Husmann, Josef, Ing.**
**6006 Luzern (CH)**

(56) Entgegenhaltungen:
DE-A- 1 802 226     DE-A- 4 427 636
DE-C- 4 313 756     GB-A- 2 164 721
US-A- 2 246 232     US-A- 3 512 022

EP 0 769 470 B1

**Beschreibung**

Die Erfindung betrifft eine Aufzugstreibscheibe mit einer Dämpfungseinrichtung.

Aus der Patentschrift DE 3 532 624 ist eine Treibscheibe bekannt geworden bei der zum Vermeiden von Schwingungen der Aussenrand auf einem an einer Nabe einer Antriebswelle angeordnetem Lager abgestützt ist. An einem fest an der Nabe angeordneten Flansch sind freitragende Stützarme mit Gummielementen angeordnet, die von einem Gehäuse des Aussenrandes aufgenommen werden. Der Aussenrand, die ringförmigen Gummielemente und die freitragenden Stützarme bilden eine Anordnung, die drehbar am Lager abgestützt ist. Ein am Aussenrand wirkendes Drehmoment wird über die Gummielemente, die freitragenden Stützarme und den Flansch auf die Nabe und dann auf die Antriebswelle übertragen. Die Lagerung des Aussenrandes ermöglicht eine geringfügige tangentiale Bewegung der Treibscheibe. Durch Vergrössern oder Verkleinern der Masse des Aussenrandes kann das Beharrungsvermögen der Treibscheibe verändert werden.

Ein Nachteil der bekannten Einrichtung liegt darin, dass zum Vermeiden von Schwingungen Gummielemente verwendet werden. Durch Alterung und Ermüdung ändern sich die Federeigenschaften der Gummielemente und somit das Dämpfungsverhalten der Treibscheibe. Kostspieliges Ersetzen der Gummielemente und Neuabgleich der Treibscheibe sind nachteilige Folgen davon.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und eine Dämpfungseinrichtung zu schaffen, deren Dämpfungsverhalten sich im Laufe der Zeit nicht verändert und die leicht einstellbar ist.

Die durch die Erfindung erreichten Vorteile sind im wesentlichen darin zu sehen, dass ein von der Dämpfungseinrichtung unabhängiger Aufbau der Treibscheibe möglich ist. Weiter vorteilhaft ist, dass auch bereits in Betrieb stehende Treibscheiben mit der erfindungsgemässen Dämpfungseinrichtung nachgerüstet und auf bestimmte Dämpfungseigenschaften abgestimmt werden können.

Im folgenden wird die Erfindung anhand von lediglich einen Ausführungsweg darstellenden Zeichnungen näher erläutert. Es zeigen:

Fig. 1              eine schematische Darstellung einer Einheit bestehend aus einem Getriebe, einer an einer Antriebswelle mit freiem Ende angeordneten Treibscheibe und einem als Dämpfungseinrichtung wirkenden Schwingungstilger,

Fig. 2              eine Einrichtung gemäss Fig. 1 mit einem Aussenlager,

Fig. 2a             ein an der getriebeseitigen Stirnseite der Treibscheibe angeordneter Schwingungstilger,

Fig. 3              einen Frequenzgang der Tangentialbeschleunigung an der Treibscheibe mit und ohne Schwingungstilger,

Fig. 4              einen Schwingungstilger mit einer speichenförmigen Torsionsfeder,

Fig. 5              Einzelheiten des Schwingungstilgers gemäss Fig. 4,

Fig. 6              einen Schwingungstilger mit einer rohrförmigen Torsionsfeder und

Fig. 7 und Fig. 8    Einzelheiten der Torsionsfeder gemäss Fig. 6.

Von einem Aufzugsgetriebe angeregte Schwingungen führen oftmals zu störenden Geräuschen in der Aufzugskabine. Besonders störend ist die Frequenz des Zahneingriffes bei 2- und 3-gängigen Schneckengetrieben. Die störende Frequenz beträgt etwa 50 Hz bzw. 75 Hz. Ein als Dämpfungseinrichtung arbeitender Schwingungstilger besteht aus einer Masse und einer Feder mit der Eigenfrequenz

$$f_t = 1/2\pi \cdot (c/m)^{\frac{1}{2}}$$

wobei c [N/m] die Federrate und m[kg] die Masse des Schwingungstilgers ist. Das eine Ende der Feder ist mit der Masse verbunden. Wird das als Fusspunkt bezeichnete andere Ende mit der Eigenfrequenz angeregt, so schwingt der Tilger in Gegenphase und versucht den Fusspunkt ruhig zu halten. Die Kraft in der Feder kompensiert dann die anregende Kraft. Mit zunehmender Masse vergrössert sich die Breite des Frequenzbandes mit reduzierter Amplitude. Als Faustregel soll die Tilgermasse etwa 10% der ruhig zu haltenden Masse betragen.

Bei Getriebeaufzügen wird ein rotierender Schwingungstilger verwendet, der etwa den gleichen Durchmesser wie die Treibscheibe hat und mit dieser mittels einer Torsionsfeder verbunden ist.

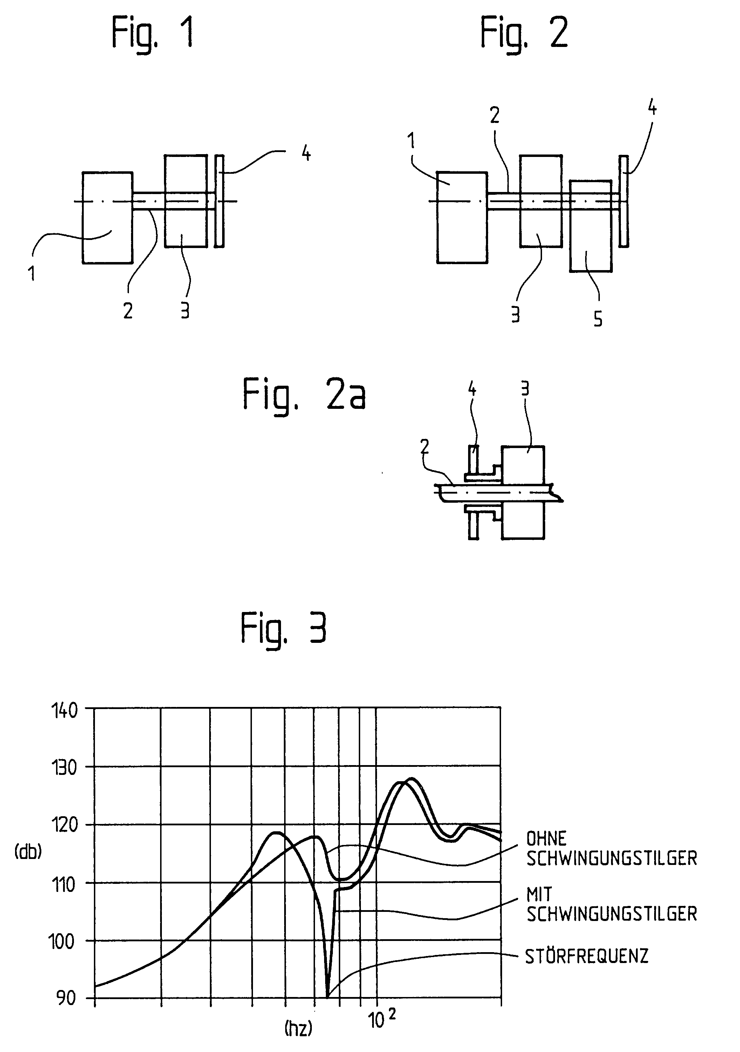

In den Fig. 1 bis 6 ist mit 1 ein Getriebe eines Aufzuges, beispielsweise ein Schneckenradgetriebe bezeichnet, das in Verbindung mit einer Antriebswelle 2 steht. Gemäss Fig. 1 hat die Antriebswelle 2 ein freies Wellenende, an dem eine Treibscheibe 3 und ein Schwingungstilger 4 angeordnet sind. Gemäss Fig. 2 wird das freie Wellenende an einem Aussenlager 5 abgestützt. In diesem Fall ist die Treibscheibe 3 zwischen Getriebe 1 und Aussenlager 5 und der Schwingungstilger 4 ausserhalb des Aussenlagers 5 angeordnet.

Der Wellenteil zwischen Treibscheibe 3 und Schwingungstilger 4 wirkt als Feder, die bei der Berechnung des Schwingungstilgers als Teil der Tilgerfeder mitberücksichtigt werden muss. Rechnerisch gesehen endet die Antriebswelle 2 in jedem Fall an der Treibscheibe 3, wobei der Schwingungstilger 4 koaxial zur Antriebswelle 2 am Wellenende angeordnet ist.

Wie in Fig. 2a gezeigt, kann der Schwingungstilger 4 auch koaxial zur Antriebswelle 2 an der getriebeseitigen Stirnseite der Treibscheibe 3 angeordnet werden. Der Schwingungstilger 4 kann auch koaxial zur Antriebswelle 2 an der wellenendeseitigen Stirnseite der Treibscheibe 3 angeordnet werden.

Fig. 3 zeigt einen Frequenzgang der Tangentialbeschleunigung an der Treibscheibe mit und ohne Schwingungstilger 4. Im gezeigten Diagramm ist auf der Ordinate die Amplitude als Verstärkung in db und auf der Abzisse die Schwingfrequenz in Hz aufgetragen. Als Anregung wirkt der Wälzfehler in der Getriebeverzahnung. Der Schwingungstilger 4 bewirkt eine starke Absenkung der Amplitude bei beispielsweise 73,5 Hz.

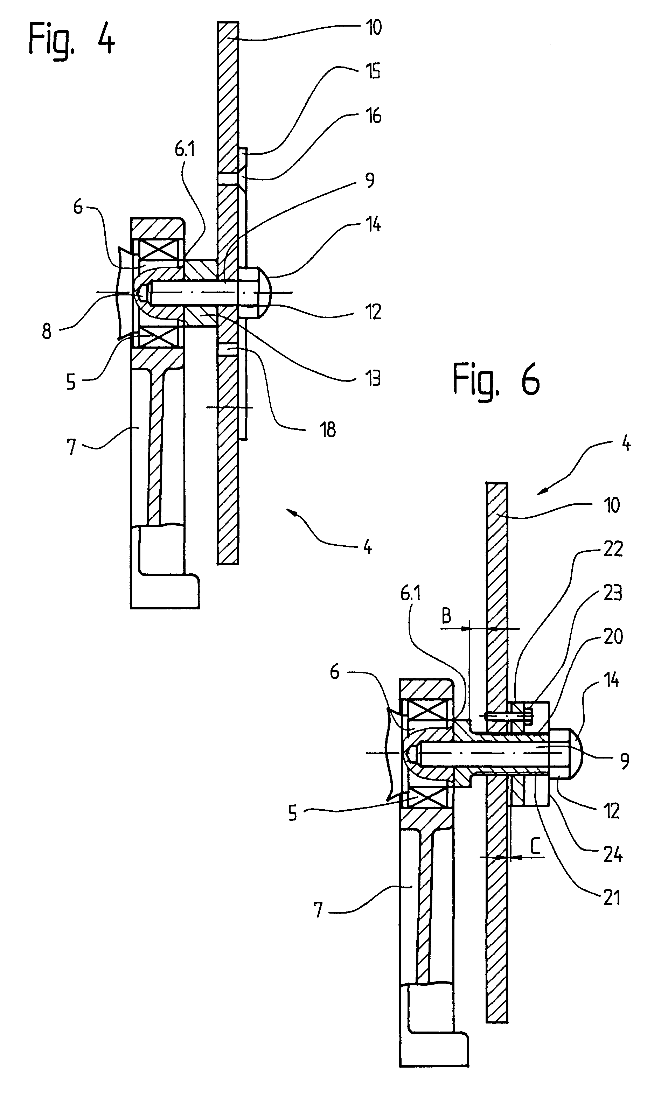

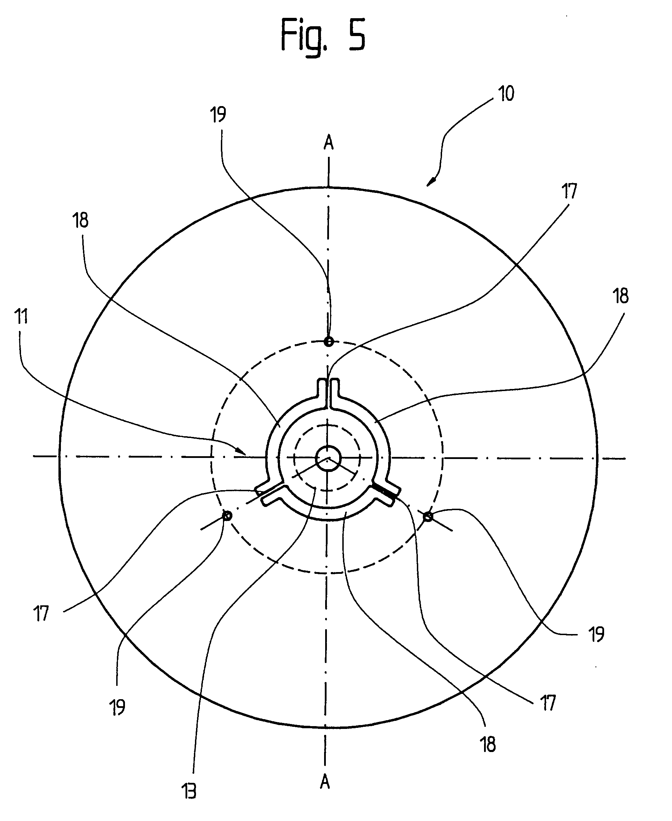

In Fig. 4 und Fig. 5 ist ein Ausführungsbeispiel eines rotierenden Schwingungstilgers 4 mit einer speichenförmigen Torsionsfeder 11 dargestellt. Fig. 4 zeigt einen Schnitt entlang der Linie A-A der Fig. 5. Ein Wellenende 6 der Antriebswelle 2 wird vom Aussenlager 5 gestützt, das von einem Lagerbock 7 gehalten wird. Das Wellenende 6 weist auf einer Stirnseite 6.1 eine Bohrung 8 auf, in die ein Gewindebolzen 9 eingeschraubt ist. Die Bohrung wird üblicherweise bereits bei der Herstellung der Antriebswelle 2 angebracht, unabhängig davon, ob die Antriebseinheit mit einem Schwingungstilger 4 ausgerüstet wird oder nicht. Der Gewindebolzen 9 trägt eine als Masse wirkende Scheibe 10 mit einer aus der Scheibe 10 herausgearbeiteten speichenförmigen Torsionsfeder 11, die eine geringfügige Bewegung der Scheibe 10 um die Achse des Gewindebolzens 9 ermöglicht. Die Federhärte ist mitbestimmend für die Eigenfrequenz des Schwingungstilgers 4. Die Scheibe 10 wird mittels einer ersten Mutter 12 auf ein Distanzstück 13 und dieses auf die Stirnseite 6.1 des Wellenendes 6 gepresst. Eine Kappe 14 deckt die erste Mutter 12 ab, damit keine Körperteile und Gegenstände von der rotierenden ersten Mutter 12 erfasst werden. Zur Feinabstimmung ist eine Zusatzmasse in der Form eines Trimmringes 15 notwendig, der mittels erster Schrauben 16 an der Scheibe 10 angeordnet ist.

Gemäss Fig. 5 weist die speichenförmige Torsionsfeder 11 Speichen 17 auf, die durch Ausnehmungen 18 in der Scheibe 10 gebildet werden. Eine Ausnehmung 18 verläuft beispielsweise kreisförmig über knapp 120 Grad und weist an den Enden Fortsätze in radialer Richtung auf. Die zwischen zwei Fortsätzen verbleibende Scheibe 10 ist die Speiche 17 mit ihrer Federwirkung. Die ersten Schrauben 16 der Trimmringe 15 greifen in an der Scheibe 10 angeordnete Gewinde 19 ein.

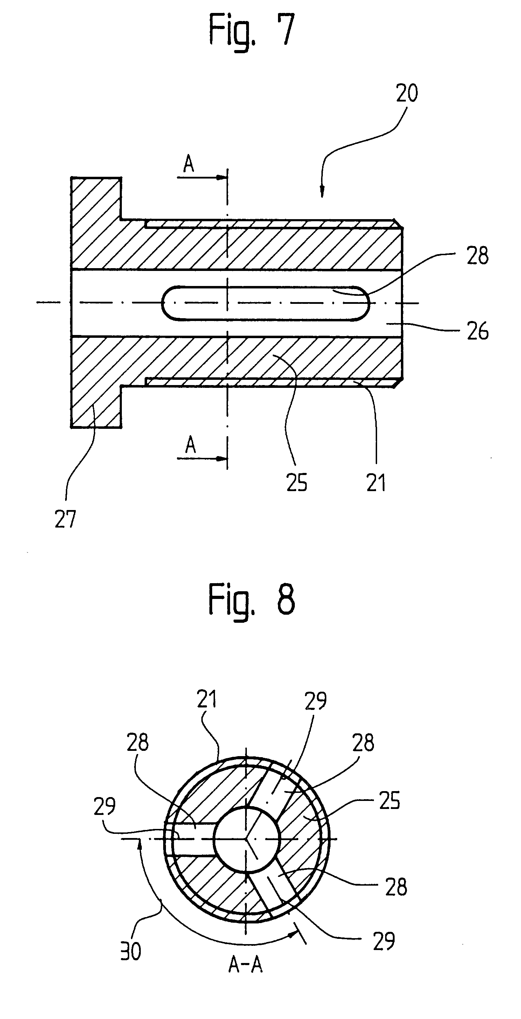

Fig. 6 zeigt eine weitere Ausführungsvariante des rotierenden Schwingungstilgers 4, bei dem die Schwingfrequenz, auch Tilgerfrequenz genannt, beispielsweise zwischen 46 Hz und 90 Hz einstellbar ist. Die erste Mutter 12 presst eine auf dem Gewindebolzen 9 angeordnete rohrförmige Torsionsfeder 20 auf die Stirnseite 6.1 des Wellenendes 6. Die Torsionsfeder 20 ermöglicht eine geringfügige Bewegung der Scheibe 10 um die Achse des Gewindebolzens 9. Ein nicht dargestelltes Gewinde der Scheibe 10 greift in ein Aussengewinde 21 der rohrförmigen Torsionsfeder 20 ein, wodurch die Scheibe 10 achsial je nach gewünschter Schwingfrequenz auf einen bestimmten Abstand B von der Stirnseite 6.1 einstellbar ist. Die Schwingfrequenz verringert sich mit zunehmendem Abstand B. Zur Sicherung der Scheibe 10 wird eine Klemmmutter 22 auf die rohrförmige Torsionsfeder 20 aufgesetzt, sodass ein Luftspalt C von beispielsweise 2...3 mm zur Scheibe 10 vorhanden ist. Mittels zweiten Schrauben 23 werden Scheibe 10 und Klemmmutter 22 gegeneinander verspannt und auf der Torsionsfeder 20 festgeklemmt. Eine Haube 24 deckt die Klemmmutter 22 ab, damit keine Körperteile und Gegenstände von der rotierenden Klemmmutter 22 und zweiten Schrauben 23 erfasst werden. Vorteilhaft bei dieser Ausführungsvariante sind die geringen Fertigungskosten und die einfache und genaue Einstellung der Tilgerfrequenz.

Fig. 7 zeigt Einzelheiten der Torsionsfeder 20 und Fig. 8 einen Schnitt entlang der Linie A-A der Fig. 7. Die Torsionsfeder 20 besteht aus einem rohrförmigen Federkörper 25 mit Aussengewinde 21 und Bohrung 26 sowie einem Federfuss 27, der mittels Mutter 12 und Gewindebolzen 9 auf die Stirnseite 6.1 des Wellenendes 6 gepresst wird. Am Federkörper 25 ist beispielsweise in achsialer Richtung mindestens ein Langschlitz 28 angeordnet. Im Ausführungsbeispiel sind drei Langschlitze 28 angeordnet, wobei je zwei radiale Achsen 29 einen Winkel 30 von 120 Grad bilden. Die Langschlitze 28 können am Federkörper 25 beispielsweise auch spiralförmig angeordnet sein. Die Langschlitze 28 vermindern die Torsionssteifigkeit der Torsionsfeder 20 und erweitern den Einstellbereich der Tilgerfrequenz.

**Patentansprüche**

1. Aufzugstreibscheibe (3) mit einer Dämpfungseinrichtung, wobei die Dämpfungseinrichtung eine Masse (10) und Federelemente (11,20) aufweist, wobei die Masse (10) und die Federelemente (11,20) koaxial zu der Antriebswelle (2) der Aufzugstreibscheibe (3), und an deren Stirnseite, angeordnet sind, und wobei die Masse (10) mittels der Federelemente (11,20) relativ zur Aufzugstreibscheibe (3) um die koaxiale Achse verdrehbar ist.

2. Aufzugstreibscheibe mit einer Dämpfungseinrichtung nach Anspruch 1,
   **dadurch gekennzeichnet,**
   **dass** die Masse eine Scheibe (10) ist, welche mittels einer Torsionsfeder (11,20) mit einer Stirnseite (6.1) der Antriebswelle (2) verbunden ist.

3. Aufzugstreibscheibe mit einer Dämpfungseinrichtung nach Anspruch 2,
   **dadurch gekennzeichnet,**
   **dass** die Scheibe (10) Speichen (17) aufweist, die als Torsionsfeder (11) wirken.

4. Aufzugstreibscheibe mit einer Dämpfungseinrichtung nach Anspruch 3,
   **dadurch gekennzeichnet,**
   **dass** Ausnehmungen (18) an der Scheibe (10) vorgesehen sind, die die Speichen (17) bilden.

5. Aufzugstreibscheibe mit einer Dämpfungseinrichtung nach den Ansprüchen 2 bis 4,
   **dadurch gekennzeichnet,**
   **dass** zur Feinabstimmung eine Zusatzmasse in der Form eines auf der Scheibe (10) angeordneten Trimmringes (15) vorgesehen ist.

6. Aufzugstreibscheibe mit einer Dämpfungseinrichtung nach Anspruch 2,
   **dadurch gekennzeichnet,**
   **dass** eine rohrförmige Torsionsfeder (20) vorgesehen ist, auf der die Scheibe (10) achsial verschiebbar angeordnet ist.

7. Aufzugstreibscheibe mit einer Dämpfungseinrichtung nach Anspruch 6,
   **dadurch gekennzeichnet,**
   **dass** zum achsialen Verschieben der Scheibe (10) an der rohrförmigen Torsionsfeder (20) ein Aussengewinde (21) vorgesehen ist und
   **dass** zur Sicherung der Scheibe (10) eine auf dem Aussengewinde (21) achsial verschiebbare Klemmmutter (22) vorgesehen ist.

8. Aufzugstreibscheibe mit einer Dämpfungseinrichtung nach Anspruch 7,
   **dadurch gekennzeichnet,**
   **dass** die Torsionsfeder (20) einen rohrförmigen Federkörper (25) und einen Federfuss (27) aufweist, wobei am Federkörper (25) mindestens ein Langschlitz (28) angeordnet ist.

**Claims**

1. Lift drive pulley (3) with a damping device, wherein the damping device comprises a mass (10) and spring elements (11, 20), wherein the mass (10) and the spring elements (11, 20) are arranged coaxially with the drive shaft (2) of the lift drive pulley (3) and at the end face thereof, and wherein the mass (10) is rotatable relative to the lift drive pulley (3) about the coaxial axis by means of the spring elements (11, 20).

2. Lift drive pulley with a damping device according to claim 1, **characterised in that** the mass is a disc (10), which is connected with an end face (6.1) of the drive shaft (2) by means of a torsion spring (11, 20).

3. Lift drive pulley with a damping device according to claim 2, **characterised in that** the disc (10) comprises spokes (17) which act as torsion spring (11).

4. Lift drive pulley with a damping device according to claim 3, **characterised in that** recesses (18), which form the spokes (17), are provided at the disc (10).

5. Lift drive pulley with a damping device according to claims 2 to 4, **characterised in that** an additional mass in the form of a trimming ring (15) arranged on the disc (10) is provided for fine adjustment.

6. Lift drive pulley with a damping device according to claim 2, **characterised in that** a tubular torsion spring (2), on which the disc (10) is arranged to be axially displaceable, is provided.

7. Lift drive pulley with a damping device according to claim 6, **characterised in that** an external thread (21) is provided at the tubular torsion spring (20) for the axial displacement of the disc (10) and that an axially displaceable clamping nut (22) is provided on the external thread (21) for the securing of the disc (10).

8. Lift drive pulley with a damping device according to claim 7, **characterised in that** the torsion spring (20) comprises a tubular spring element (25) and a spring foot (27), wherein at least one longitudinal slot (28) is arranged at the spring element (25).

### Revendications

1. Poulie motrice d'ascenseur (3) pourvue d'un amortisseur, étant précisé que l'amortisseur comporte une masse (10) et des éléments élastiques (11, 20), que la masse (10) et les éléments élastiques (11, 20) sont disposés coaxialement par rapport à l'arbre d'entraînement (2) de la poulie motrice d'ascenseur (3), sur le côté frontal de celui-ci, et que la masse (10) est apte à se tordre par rapport à ladite poulie motrice (3), autour de l'axe coaxial, grâce aux éléments élastiques (11, 20).

2. Poulie motrice d'ascenseur pourvue d'un amortisseur selon la revendication 1, **caractérisée en ce que** la masse est une plaque (10) qui est reliée à l'aide d'un ressort à torsion (11, 20) à un côté frontal (6.1) de l'arbre d'entraînement (2).

3. Poulie motrice d'ascenseur pourvue d'un amortisseur selon la revendication 2, **caractérisée en ce que** la plaque (10) a des rayons (17) qui agissent comme ressort de torsion (11).

4. Poulie motrice d'ascenseur pourvue d'un amortisseur selon la revendication 3, **caractérisée en ce qu'**il est prévu sur la plaque (10) des évidements (18) qui définissent les rayons (17).

5. Poulie motrice d'ascenseur pourvue d'un amortisseur selon les revendications 2 à 4, **caractérisée en ce qu'**il est prévu, pour l'ajustage précis, une masse supplémentaire sous la forme d'une bague d'équilibrage (15) disposée sur la plaque (10).

6. Poulie motrice d'ascenseur pourvue d'un amortisseur selon la revendication 2, **caractérisée en ce qu'**il est prévu un ressort à torsion tubulaire (20) sur lequel la plaque (10) est mobile axialement.

7. Poulie motrice d'ascenseur pourvue d'un amortisseur selon la revendication 6, **caractérisée en ce qu'**il est prévu sur le ressort à torsion tubulaire (20), pour le déplacement axial de la plaque (10), un filetage extérieur (21), et **en ce qu'**il est prévu, pour bloquer la plaque (10), un écrou de serrage (22) mobile axialement sur le filetage extérieur (21).

8. Poulie motrice d'ascenseur pourvue d'un amortisseur selon la revendication 7, **caractérisée en ce que** le ressort à torsion (20) comporte un corps de ressort tubulaire (25) et une base de ressort (27), au moins une fente oblongue (28) étant disposée sur le corps de ressort (25).

# Fig. 1

# Fig. 2

# Fig. 2a

# Fig. 3

EP 0 769 470 B1

Fig. 4

10
15
16
9
14
12
13
18
6.1
6
8
5
7
4

Fig. 6

4
10
22
23
20
14
9
12
24
21
6.1
B
6
5
7
C

7

# Fig. 5

EP 0 769 470 B1

# Fig. 7

A

20

28

26

27

A

25   21

# Fig. 8

21   29

28        28

29              25

28

30        29

A-A

9